# EUROPEAN PATENT APPLICATION

(11) **EP 1 775 092 A1**
(43) Date of publication of application: **18.04.2007**
(21) Application number: 05425727.4
(22) Date of filing: 17.10.2005
(51) Int. Cl.: B29B 15/12, B29C 70/52

(54) **Process and apparatus to impregnate bundles of continuous fibers with molten state thermoplastic polymers**

(71) Applicant: Bortoluzzi, Claudio, 15100 Alessandria (IT)
(72) Inventor: Bortoluzzi, Claudio, 15100 Alessandria (IT)
(74) Representative: Robba, Pierpaolo

(57) **Abstract**

The invention refers to a process, and to an apparatus to carry out said process, to impregnate bundles of parallel continuous fibers (10) with molten state thermoplastic polymers (20), said thermoplastic polymers having a melting point lower than that of said fibers, said bundles of continuous fibers being made slide, in contact with the molten thermoplastic polymer, on at least two first sliding curved surfaces (8) fixed and ending in a cylindrical section perpendicular to the path of said fibers coupled with at least two second sliding curved surfaces (2b) obtained or applied on the lower side of a bulkhead (2) and ending in a cylindrical section perpendicular to the path of said fibers, said second sliding curved surfaces (2b) being adjustable in height in the direction perpendicular to the path of said fibers so to vary the sliding surface or the contact angle of said fibers (10) with respect to said first sliding curved surfaces (8), depending on the viscosity of the molten thermoplastic polymer, this way adjusting the pressure gradient between the contact areas bundle of fibers / first and second sliding curved surfaces and the surrounding molten thermoplastic polymer, such pressure gradient as well as the cylindrical shape of the exit portion from said first and second curved surfaces (8, 2b) causing inside the molten polymer a motion component orthogonal to the bundle of fibers, which helps the widening of said bundle of fibers and the penetration of the molten thermoplastic polymer inside the bundle itself.

## Description

The invention refers to a process to impregnate bundles of continuous fibers with molten state thermoplastic polymers and to an apparatus to carry out said process.

More precisely, the invention concerns a process, and the apparatus to carry it out, to impregnate bundles of continuous fibers with thermoplastic polymers having a melting point lower than the melting point of the fibers.

The invention further refers to the bundles of continuous fibers impregnated with molten state thermoplastic polymers by means of said process and apparatus as well as to the products obtained with said bundles of impregnated continuous fibers.

The attempts made to obtain thermoplastic structures reinforced with long or continuos fibers have up till now clashed with the difficulty of making the molten thermoplastic polymer to penetrate among the elementary fibers, i.e. of homogeneously distributing the molten polymer and of completely impregnating the fibers; in addition, by employing apparatuses such as, for instance, the confluent belts presses or the flat presses, also the disadvantage of the inclusion of air bubbles, which alters the mechanical and aesthetic properties of the finished products, occurs.

Examples of improvements of the above-mentioned systems are shown, for instance, in the European Patent 0 287 427 granted on 24.07.1991 in the name of ATOCHEM and in the European Patent application 0 712 716 published on 22.05.1996 in the name of DANUBIA PETROCHEM POLYMERE.

The processes, and the relevant apparatuses to carry them out, described in the aforesaid documents substantially consist in making a bundle of parallel fibers to pass along a non-modifiable curvilinear path wherein the impregnation with molten polymer takes place.

In the region comprised between the curved surface and the bundle of fibers, an accumulation of said molten polymer under pressure is originated, the pressure being generated by the towing action exercised on the fibers as well as by the angle between the part of fibers entering and the part of fibers exiting the curve; said pressure tends to space the fibers the ones from the others, so allowing the penetration of the molten polymer among the elementary fibers.

These processes, and the relevant apparatuses to carry them out, to impregnate bundles of fibers with molten polymers, nevertheless show the disadvantage to provide for a high sliding surface and paths having a relatively limited section, this creating considerable frictional forces depending on the dynamic viscosity of the molten polymer.

A further disadvantage is represented by the difficulty of adjusting the ratio between fiber and polymer in the final product.

Another disadvantage consists in the fact that, in case the fed flow-rate of molten polymer depends on the requirement of obtaining a set fiber/polymer ratio, the moving bundle of fibers conveys an amount of molten polymer, said amount depending on the fiber speed and on the viscosity of the polymer itself, from the feeding region to the exit region, thus generating impregnation non-homogeneity phenomena the more important the more viscous the polymer is and the higher the movement speed of the bundle of fibers is.

It is therefore an object of the present invention to overcome the constraints of the processes, and of the relevant apparatuses, known so far to impregnate bundles of fibers with molten polymers, allowing to decrease the sliding surfaces.

A further object of the invention is to be able to adjust the ratio between fiber and polymer in the final product.

Finally, another object of the invention is to avoid that impregnation non-homogeneity phenomena occur.

These and other objects are attained by the process to impregnate bundles of continuous fibers with molten state thermoplastic polymers and by the apparatus to carry out said process according to the invention, as claimed in the appended claims.

Advantageously, the employ of the process, and of the corresponding apparatus, according to the invention allows to decrease the sliding surfaces with respect to the conventional processes of the known prior art and to the corresponding apparatuses, thus decreasing the tensile stress.

Advantageously, moreover, the employ of the process, and of the corresponding apparatus, according to the invention allows to adjust the ratio between fiber and polymer in the final product.

Advantageously, it is furthermore possible to avoid impregnation non-homogeneity phenomena.

The invention will be now described in detail also with reference to the attached figures, given by way of non limiting example, in which:
- Fig. 1 shows a simplified scheme of the apparatus according to the invention, also including accessory devices;
- Fig. 2 shows a design detail, top view, of the first and second sliding curved surfaces of the apparatus according to Fig. 1;
- Fig. 3 shows a schematic representation of an overall plant incorporating the apparatus according to Fig. 1.

The invention too, like the solutions according to the prior art, takes advantage of a curvilinear path to generate a pressure gradient allowing the molten polymer to penetrate among the elementary fibers; nevertheless the invention, unlike the prior systems wherein said curvilinear path is fixed and invariable, provides for the adjustment of the curved surfaces onto which the fibers slide, besides eliminating the portions of path in which the fibers themselves tend to separate from said surfaces. In these portions, defined by the interspace between a sliding surface and the following one, the fibers freely slide, thus eliminating a considerable frictional component, which among other things does not help the penetration, but on the contrary tends to remove the polymer penetrated among said fibers. More precisely, the present invention, by providing for two series of sliding surfaces, a first lower one and a second upper one, allows to adjust the sliding surfaces through the displacement of the upper series of surfaces in a direction perpendicular to the advancing direction of the fibers. All the curved surfaces are formed by the sole entrance portion of the fibers, which culminates in a cusp; such configuration further facilitates the opening of the fibers and produces, in correspondence to the separation point of the fibers from the sliding curved surface, an increase of the pressure gradient between the pressure of the molten polymer in the sliding area and the pressure of the surrounding environment moreover generating a motion component orthogonal to the bundle of fibers, which helps their widening. From this point up to the contact with the following sliding curved surface, the fibers freely slide, reducing the tensile strength required for movement.

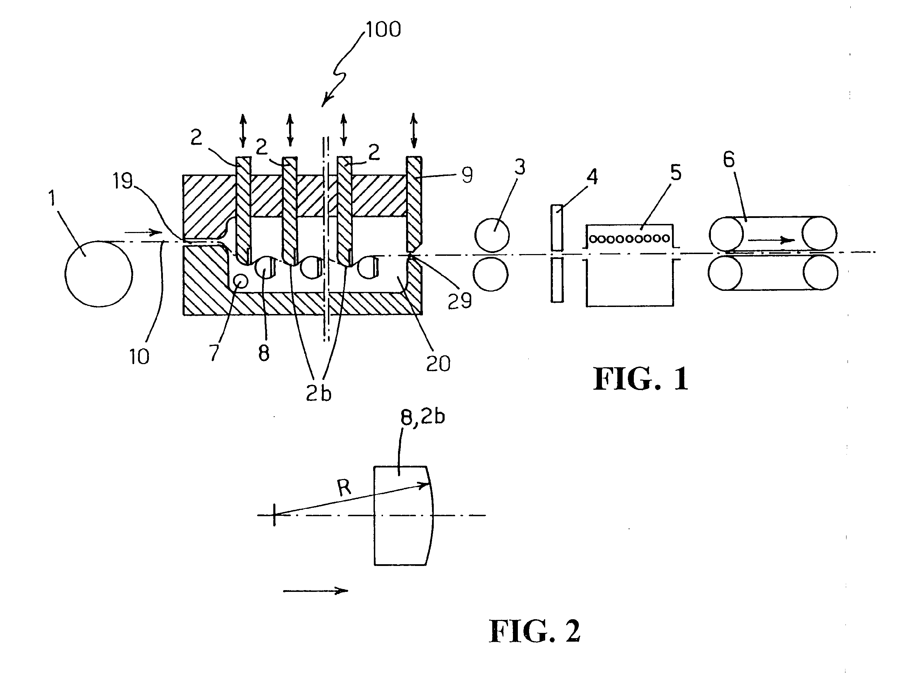

The process to impregnate bundles of parallel continuous fibers with molten state thermoplastic polymers, which will be hereinafter illustrated with reference to Fig. 1, comprises the steps of:
- preparing a supply 1 of parallel continuous fibers 10;
- preparing a molten state thermoplastic polymer 20 having a melting point lower than that of said fibers;
- preparing an apparatus 100 provided with a first entrance 19 for said fibers 10, a second entrance 7 for said molten thermoplastic polymer 20, a main body comprising at least two first sliding curved surfaces 8 and at least two second sliding curved surfaces 2b arranged two by two, each of said first sliding curved surfaces 8 being fixed and ending in a cylindrical section with axis substantially perpendicular to the path of said fibers 10 and each of said second sliding curved surfaces 2b, also ending in a cylindrical section with axis substantially perpendicular to the path of said fibers 10, being obtained or applied on the lower side of a bulkhead 2 adjustable in the direction perpendicular to the path of said fibers 10 and an exit 9, 29 for said fibers impregnated with molten thermoplastic polymer;
- feeding said fibers 10 into said apparatus 100 through said first entrance 19, said fibers thus forming one or more bundles;
- feeding said molten thermoplastic polymer 20 into said apparatus 100 through said second entrance 7;
- making said bundle of fibers 10 slide in contact with the molten thermoplastic polymer 20 on said first and second sliding surfaces 8 and 2b arranged two by two;
- adjusting the height of said second sliding surfaces 2b positioned on said bulkhead 2 adjustable so as to vary the sliding surface or the contact angle of said fibers 10 with respect to said first surfaces 8, depending on the viscosity of the molten thermoplastic polymer, this way adjusting the pressure gradient between the contact areas bundle of fibers 10 / surfaces 8 and 2b and the surrounding molten thermoplastic polymer, such pressure gradient causing the widening of said bundle of fibers 10, and the penetration of the molten thermoplastic polymer 20 inside the bundle itself.

As far as the parallel continuous fibers are concerned, they are preferably formed by materials such as glass, carbon, ceramics and the like, and mixtures thereof.

Fibers are fed through one or more reels or equivalent devices; said fibers enter the apparatus 100 through the entrance 19.

As far as the thermoplastic polymer is concerned, it is preferably selected among polypropylene (having a melting point of about 160 - 170 °C), polyethylene terephthalate (PET) (having a melting point of about 260 - 270 °C), nylon (having a melting point of about 260 - 270 °C) and the like, and mixtures thereof; the employed polymer, or mixture of polymers, can also be added with additives such as flame-blocking agents, inert fillers, reagents, lubricants and the like.

It is also possible to employ modified thermoplastic polymers, compatible with the fibers or with their covering, in order to avoid sliding phenomena of the fibers inside the sheath formed by the solidified thermoplastic polymer; anyway, the penetration of the thermoplastic polymer among the elementary fibers occurs independently from the compatibility of the polymer itself with the fibers, the compatibility only affecting the resistance of the final composite product.

The molten polymer is fed through an extruder or equivalent device; said polymer enters the apparatus 100 through the entrance 7 in an amount such as to partially fill said apparatus 100 and to allow the achievement of the wanted fiber/polymer ratio.

As far as the apparatus 100 is concerned, it is maintained at a temperature equal to the temperature of the molten thermoplastic polymer plus or minus 10 °C.

As far as the first sliding surfaces 8 are concerned, present in two or more units, they consist of fixed cylindrical bodies fastened to two opposite walls of the main body and having axis orthogonal to the fibers movement, they are preferably made of chromate or tempered steel, or of ceramics, and they end in a cylindrical section perpendicular to the path of the fibers 10 that, causing in the molten polymer movement a component orthogonal to the bundle of fibers, helps the widening of the fibers themselves, thus facilitating the penetration of the molten polymer between fiber and fiber.

As far as the second sliding surfaces 2b are concerned, present in two or more units each of which coupled with a corresponding first surface 8, they are obtained or applied on the lower side of a bulkhead 2 adjustable in height and they are preferably made of chromate or tempered steel, or of ceramics; said second surfaces 2b are preferably obtained from the mass forming said adjustable bulkhead 2 but, as an alternative, they can be applied as additional bars having the upper end fastened to said bulkhead 2, they face the bundle of fibers and they have a bending sharply discontinued from a cylindrical surface, with axis substantially perpendicular to the direction of the fibers, similarly to the configuration of the underlying first surfaces 8.

Fig. 2 shows the profile obtained by carving of said cylindrical section of said first and second surfaces 8 and 2b having radius R preferably ranging from 15 mm to 100 mm; said profile obtained by carving is obtained by intersection between each of said surfaces 8 and 2b with a cylindrical portion with radius R perpendicular to the advancing direction of the fibers and, therefore, said first and second sliding surfaces 8 and 2b have a characteristic cusp shape. The intersection between the cylindrical section with radius R and each curved surface 8 and 2b is a spatial curve generating in the molten polymer movement a component orthogonal to the movement itself, thus facilitating the opening of the fibers.

The first and second sliding curved surfaces 8 and 2b can be adapted for a single bundle of fibers or for more parallel bundles; in this latter case, the curved surfaces 8 and 2b will end with as many cylindrical surfaces with radius R as many the bundles of fibers are.

Said second surfaces 2b are adjustable in height whether together, through the movement of said bulkhead 2, or individually; the adjustment can be carried out through manually operable or automatizable mechanical devices.

The opportunity of adjusting the height of said bulkhead 2, as well as of the corresponding sliding surfaces 2b, allows to adjust the length of the sliding path of the fibers on the sliding curved surfaces as well as to adjust the pressure gradients inside the molten polymer.

The pressure gradients generated inside the molten polymer cause a movement of the molten polymer itself, which tend to widen and impregnate the single fibers; such pressure gradients, as aforesaid, are a consequence of the fibers movement inside the molten polymer along their sliding path, having adjustable length, on said curved surfaces, at the end of which a sudden variation of the path free section exists, with increasing of the pressure gradient of the molten polymer between the fibers / sliding surfaces contact area, and the surrounding free area and generation of a motion component orthogonal to the fibers direction.

The opportunity of varying both the length of the sliding path of the fiber on the first surfaces 8 and the gap of the pass-through section between the second sliding surfaces 2b and the first sliding surfaces 8, allows to maximize the pressure gradient.

Particularly, the fact of being able to lower each of the second sliding surfaces 2b in the corresponding space formed between two consecutive first sliding surfaces 8 allows to vary the sliding angle of the fibers 10 on the curved surfaces 8 and 2b, and therefore the sliding strengths on the surfaces 8 and 2b, so as to allow the impregnation also with molten state polymers having very high viscosities, for which the strength required for opening the fibers could result higher than the tensile strength of the fibers themselves.

The path carried out by fibers 10 between said first and second surfaces 8 and 2b, which as aforesaid helps the widening of the fibers themselves and facilitates the impregnation of the fibers with the molten polymer, alternates the sliding movement, which takes place only on the entrance portions of the curved surfaces, with parts without sliding movement because the exit from the same curved surfaces takes place without contact.

Preferably, the passage of the bundle of fibers 10 on said first and second surfaces 8 and 2b is reiterated two or more times, so to cause the complete widening and the total impregnation of said bundle of fibers.

The pass-through speed of the bundle of fibers 10 is adjusted depending on the feed flow-rate of the thermoplastic polymer so as to allow the removal of said molten thermoplastic polymer from the bundle of fibers in an amount corresponding to the fed flow-rate of said molten thermoplastic polymer; preferably, the speed is variable in the range from about 5 to 50 m/min. and it is adjusted depending on the characteristics of the molten polymer as well as on the ratio between the content of fibers and the content of thermoplastic polymer that is wanted to be achieved in the product exiting from the apparatus 100.

At the end of the wavy path, the fibers are aligned on a plane and come out from apparatus 100 through the exit section 9, 29 and, more precisely, through the aperture 29, whose pass-through section is adjustable by lowering or lifting a bar 9 and that therefore allows the adjustment and the conservation of the ratio between the fibers and the thermoplastic polymer depending on the pass-through section itself, holding inside apparatus 100 the possible excess of molten polymer dragged by the fibers; the fibers impregnated with molten thermoplastic polymers that come out from the adjustable section exit 9, 29 are at the melting point of the polymer itself.

Preferably, the content of fibers with respect to the content of thermoplastic polymer ranges from 5 % to 80 % by weight.

The aperture 29 moreover prevents the leakage of the amount of molten polymer dragged by the fibers in case exceeding the preset amount for the right fiber/polymer ratio in the final product; the amount of molten thermoplastic polymer in case exceeding the amount necessary to impregnate the bundle of fibers is recirculated at the entrance to apparatus 100, by natural flow or by means of suitable mechanical devices internal and/or external to apparatus 100 itself.

In particular, the exceeding amount of molten polymer, which occupies the lower portion of apparatus 100, can be recirculated to the polymer feeding extruder or at the entrance to the apparatus simply by gravity or by means of, for instance, a melt pump, an endless worm or a couple of endless worms, or another equivalent device, this way maintaining the impregnation conditions uniform.

Always with reference to Fig. 1, it is shown that the fibers are maintained flat and parallel aligned, also downstream the passage through the exit and fiber/polymer ratio adjustment section 9, 29, by means of an alignment device 3, preferably a couple of rollers or a plane aperture or another equivalent device; along the path from apparatus 100 to the alignment device 3, the bundle of fibers also starts to cool due to the simple contact with the surrounding air.

In order to allow the final cooling of the bundle of impregnated fibers, a cooling equipment 5 is provided, positioned downstream said alignment device 3 and upstream the towing device 6, consisting of, for instance, one or more couples of rollers, a track system, motorized rollers or another equivalent system.

Optionally, in case a required, circular or of another shape, section has to be given to the bundle of parallel fibers impregnated with polymer, at the exit from the alignment device 3, said bundle, even sufficiently thermoformable, is made to pass through a conformation device, or die drawplate, 4, positioned between the alignment device 3 and the cooling equipment 5; inside said conformation device 4, the section of the low thickness (0.1 - 2 mm) rectangular bundle can be transformed into a round, square or a different shape section, the bundle of impregnated fibers so modified being able to be collected into rolls or cut into pieces or reduced into granules, to be subjected to subsequent processing.

The distance between apparatus 100 and the alignment device 3 is adjustable depending on the speed and on the temperature at the exit of the bundle of impregnated fibers; similarly, the distance between the alignment device 3 and the die drawplate 4 is adjustable depending on the characteristics of the polymer.

In case the semi-finished product do be obtained is a plane ribbon, downstream apparatus 100, the assembly of the above-mentioned devices 3, 4, 5 and 6 can be replaced by a three rollers calender that allows generating the required tensile strength, cooling the product, giving the superficial finishing and conveying to a proper pick-up device, for instance a winding machine, when manufacturing continuous products or to a cutter to reduce the bundle of impregnated fibers into preset lengths in order to obtain semi-finished products having a controlled length of impregnated fiber, said semi-finished products being able to be subsequently employed for moulding operations or another kind of thermoplastic technology in order to obtain finished manufactured products.

In order to obtain finished manufactured products, it is furthermore possible either to wind said bundle of hot impregnated fibers, upon exit from apparatus 100, onto suitable mandrels, in accordance with the "filament-winding" technique, or to form said bundle in accordance with the pultrusion technique.

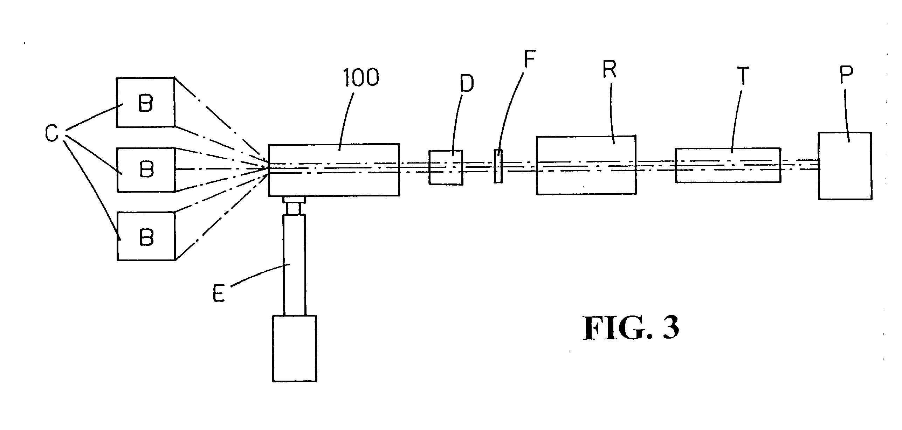

With reference to Fig. 3, it is shown an overall plant, which incorporates the apparatus 100 to impregnate bundles of continuous fibers with a molten state thermoplastic polymer according to the invention, said plant comprising:
- a creel C for unwinding a proper number of fiber reels B;
- an extruder E, or another equivalent device, able to supply the amount of polymer necessary for impregnation; inside extruder E itself could also be added to the molten polymer various additives, such as for instance flame-blocking agents, inert fillers, reagents, lubricants and the like;
- the apparatus 100;
- an alignment device D to maintain the fibers aligned upon exit from apparatus 100;
- a die drawplate F, possibly able to be opened, or another equivalent device able to gather, conform or however modify the plane ribbon section exiting from apparatus 100;
- a cooling equipment R;
- a towing device T;
- a final system P consisting of a cutter when set length products are wanted to be obtained or, as an alternative, of winding machines when continuous products are wanted to be obtained.

It is evident that the process according to the disclosed invention allows to manufacture semi-finished composites having the more different shapes, which comprise the usual patterns that can be obtained with the pultrusion technique, up to more complex structures carried out by hot overlaying multiple layers.

The overlaying of multiple layers as plane plates allows to obtain final products, of the composite kind, in which for instance it is possible to have:
- a superficial aesthetic layer,
- a first one-way layer,
- a second one-way layer crossed with respect to the previous one,
- a third one-way layer crossed with respect to the previous ones,
- a further one-way layer similar to the first one-way layer,
- a superficial aesthetic layer similar to the first one.

One or more of the above-mentioned layers can consist of randomly arranged pieces of impregnated ribbon reinforced with parallel fibers.

The adhesion of the multiple layers can be achieved by compression of the layers themselves before their solidification, or by extrusion of a film of the same thermoplastic polymer that forms the layers, or of a compatible thermoplastic polymer; said adhesion can also occur by heating the cold overlaying layers with infrared rays, microwaves, hot air, hot plate or another system, until making them soften, and subsequently pressing them.

The thermoplastic nature of the manufactured products obtained through the disclosed process allows the thermal post-processing of the sames, by allowing, subject to heating at a proper temperature, processing such as, for instance, bending, embossing and welding.

The processing trimmings of the above-mentioned semi-finished products can be recycled, by grinding and re-melting, to produce composite particulars, compatible with the original material, and capable of being subjected to processing by compression and/or injection moulding.

## Claims

1. A process to impregnate bundles of parallel continuous fibers (10) with molten state thermoplastic polymers (20), comprising the steps of:
- preparing a supply (1) of parallel continuous fibers (10);
- preparing a molten state thermoplastic polymer (20) having a melting point lower than that of said fibers;
- preparing an apparatus (100) provided with a first entrance (19) for said fibers (10), a second entrance (7) for said molten thermoplastic polymer (20), a main body comprising at least two first sliding curved surfaces (8) and at least two second sliding curved surfaces (2b) arranged two by two, each of said first sliding curved surfaces (8) being fixed and ending in a cylindrical section perpendicular to the path of said fibers (10) and each of said second sliding curved surfaces (2b) being obtained or applied on the lower side of a bulkhead (2) adjustable in the direction perpendicular to the path of said fibers (10) and ending in a cylindrical section perpendicular to the path of said fibers (10), and an exit (9, 29) for said fibers impregnated with said molten thermoplastic polymer;
- feeding said fibers (10) into said apparatus (100) through said first entrance (19), said fibers thus forming one or more bundles;
- feeding said molten thermoplastic polymer (20) into said apparatus (100) through said second entrance (7);
- making said bundle of fibers (10) slide in contact with the molten thermoplastic polymer (20) on said first and second sliding curved surfaces (8, 2b) arranged two by two using a towing device (6) fitted to cause the movement of the fibers themselves;
- adjusting the height of said second sliding curved surfaces (2b) positioned on said bulkhead (2) adjustable so as to vary the sliding surface or the contact angle of said fibers (10) with respect to said first sliding curved surfaces (8), depending on the viscosity of the molten thermoplastic polymer, this way adjusting the pressure gradient between the contact areas bundle of fibers (10) / first and second sliding curved surfaces (8, 2b) and the surrounding molten thermoplastic polymer (20), such pressure gradient as well as the cylindrical shape of the exit portion from said first and second curved surfaces (8, 2b) causing inside the molten polymer a motion component orthogonal to the bundle of fibers, which helps the widening of said bundle of fibers (10) and the penetration of the molten thermoplastic polymer (20) inside the bundle itself.

2. A process according to claim 1, wherein the passage of said bundle of fibers (10) on said first and second sliding curved surfaces (8, 2b) is reiterated two or more times so to cause the complete widening and the total impregnation of said bundle of fibers (10).

3. A process according to claim 1 o 2, wherein said parallel continuous fibers (10) are formed by materials such as glass, carbon, ceramics and the like, and mixtures thereof.

4. A process according to claim 1 o 2, wherein said thermoplastic polymer (20) is selected among polypropylene, polyethylene terephthalate (PET), nylon and the like, and mixtures thereof.

5. A process according to any of the preceding claims, wherein the pass-through speed of the bundle of fibers (10) is adjusted depending on the feed flow-rate of said thermoplastic polymer (20) so as to allow the removal of said molten thermoplastic polymer (20) from the bundle of fibers (10) in an amount corresponding to the fed flow-rate of said molten thermoplastic polymer (20), thereby achieving in the product exiting from said apparatus (100) preset ratios between the content of fibers (10) and the content of thermoplastic polymer (20).

6. A process according to claim 5, wherein the adjusting and the conservation of the ratio between fibers (10) and thermoplastic polymer (20) are obtained by making said bundle of fibers (10), which drags an indeterminate amount of polymer (20), pass through an aperture (29), the amount of molten thermoplastic polymer impregnating the bundle of fibers being adjusted depending on the pass-through area of said aperture (29).

7. A process according to claim 5 o 6, wherein the content of fibers with respect to the content of the thermoplastic polymer ranges from 5 % to 80 % by weight.

8. A process according to claim 6, wherein the amount of molten thermoplastic polymer (20) in case exceeding the amount necessary to impregnate said bundle of fibers (10) is recirculated at the entrance to said apparatus (100), by natural flow or by means of suitable mechanical devices internal and/or external to said apparatus (100).

9. A process according to any of the preceding claims, wherein said apparatus (100) is maintained at a temperature equal to the temperature of the molten thermoplastic polymer plus or minus 10 °C.

10. A process according to any of the preceding claims, further comprising the step of treating said bundle of fibers (10) inside an alignment device (3), located downstream said apparatus (100) at a distance from said apparatus (100) adjustable depending on the temperature and on the speed of the impregnated fibers, to maintain the impregnated fibers flat and parallel aligned as well as to allow a first cooling in contact with the surrounding air.

11. A process according to any of the preceding claims, further comprising the step of treating said bundle of fibers (10) inside a conformation device, or die drawplate, (4), located downstream said alignment device (3) at a distance from said alignment device (3) adjustable depending on the characteristics of the polymer, to conform the bundle of fibers into a wanted shape by transforming the section of the low thickness rectangular bundle into a round, square or a different shape section, the bundle of impregnated fibers so modified being able to be collected into rolls or cut into pieces or reduced into granules, to be subjected to subsequent processing.

12. A process according to any of the preceding claims, further comprising the step of treating said bundle of impregnated fibers exiting from said apparatus (100) inside a system comprising at least a cooling equipment (5) and a cutter to reduce the bundle of impregnated fibers into preset lengths in order to obtain semi-finished products having a controlled length of impregnated fibers, said semi-finished products being subsequently subjected to moulding or to thermoforming or to another kind of processing in order to obtain finished manufactured products.

13. A process according to any of the claims 1 to 11, further comprising the step of treating said bundle of impregnated fibers exiting from said apparatus (100) inside a system comprising at least a cooling equipment (5) and a winding machine when manufacturing continuous products.

14. A process according to any of the preceding claims, further comprising the step of winding said bundle of fibers onto suitable mandrels, in accordance with the "filament-winding" technique, in order to obtain finished manufactured products.

15. A process according to any of the preceding claims, further comprising the step of forming said bundle of fibers in accordance with the pultrusion technique in order to obtain finished manufactured products.

16. A process according to any of the preceding claims, wherein mixtures of said fibers (10) and mixtures of said thermoplastic polymer (20) are employed, these latters also added with additives such as flame-blocking agents, inert fillers, reagents, lubricants and the like.

17. An apparatus (100) to impregnate bundles of parallel continuous fibers (10) with molten state thermoplastic polymers (20), said thermoplastic polymers having a melting point lower than that of said fibers, comprising:
- a first entrance (19) for said fibers (10);
- a second entrance (7) for said molten thermoplastic polymer (20);
- a main body comprising at least two first sliding curved surfaces (8) and at least two second sliding curved surfaces (2b) arranged two by two, each of said first sliding curved surfaces (8) being fixed and ending in a cylindrical section perpendicular to the path of said fibers (10) and each of said second sliding curved surfaces (2b) being obtained or applied on the lower side of a bulkhead (2) and ending in a cylindrical section perpendicular to the path of said fibers (10), said molten thermoplastic polymer (20) partially filling said apparatus (100) and said bundle of fibers (10) being made slide on said first and second sliding curved surfaces (8, 2b), arranged two by two, in contact with said molten thermoplastic polymer (20) using a towing device (6) fitted to cause the movement of the fibers themselves; **characterized in that** said second sliding curved surfaces (2b) obtained or applied on the lower side of said bulkhead (2) are adjustable in height with respect to said first fixed surfaces (8), so as to vary the sliding surface or the contact angle of said fibers (10) with respect to said first sliding curved surfaces (8), depending on the viscosity of the molten thermoplastic polymer, this way adjusting the pressure gradient between the contact areas bundle of fibers (10) / first and second sliding curved surfaces (8, 2b) and the surrounding molten thermoplastic polymer (20), such pressure gradient as well as the cylindrical shape of the exit portion from said first and second curved surfaces (8, 2b) causing inside the molten polymer a motion component orthogonal to the bundle of fibers, which helps the widening of said bundle of fibers (10) and the penetration of the molten thermoplastic polymer (20) inside the bundle itself;
- an exit (9, 29) for said fibers impregnated with said molten thermoplastic polymer.

18. An apparatus (100) according to claim 17, further comprising first means (1) fitted to feed said fibers (10) to said main body and second means (3) fitted to maintain the impregnated fibers flat and parallel aligned, said second means (3) being positioned at a distance from said exit (9, 29) adjustable depending on the speed and on the temperature at the exit of the bundle of impregnated fibers.

19. An apparatus (100) according to claim 18, wherein said first means (1) comprise at least a reels unwinder and said second means (3) comprise at least some rollers, in order to maintain the fibers flat and parallel aligned by flattening the fibers themselves as well as to allow a first cooling in contact with the surrounding air, or other equivalent devices.

20. An apparatus (100) according to claim 17, further comprising means fitted to bring said thermoplastic polymer in the molten state and to feed it into said main body.

21. An apparatus (100) according to claim 20, wherein said means comprise an extruder or another equivalent melting system, also able to carry out the mixing of the thermoplastic polymer components and/or the addition of additives such as flame-blocking agents, inert fillers, reagents, lubricants and the like.

22. An apparatus (100) according to claim 17, wherein said exit (9, 29) for said impregnated fibers comprises an aperture (29), whose pass-through area is adjustable through the lowering or the lifting of a bar 9, so as to adjust the amount of molten thermoplastic polymer impregnating the bundle of fibers, said impregnated fibers coming out at the melting point of the polymer itself.

23. An apparatus (100) according to claim 17, further comprising a system, which makes use of the natural flow or which employs suitable mechanical devices internal and/or external to said apparatus (100), fitted to recirculate at the entrance to said apparatus (100) the amount of molten thermoplastic polymer (20) in case exceeding the amount necessary to impregnate said bundle of fibers (10).

24. An apparatus according to any of the claims 17 to 23, further comprising, downstream said second means (3), and at a distance from said second means (3) adjustable depending on the characteristics of the polymer, a conformation device, or die drawplate, (4) to conform the bundle of fibers into a wanted shape by transforming the section of the low thickness rectangular bundle into a round, square or a different shape section, the bundle of impregnated fibers so modified being able to be collected into rolls or cut into pieces or reduced into granules, to be subjected to subsequent processing.

25. An apparatus according to any of the claims 17 to 24, further comprising, downstream said second means (3), a system consisting of at least a cooling equipment (5) and a cutter to reduce the bundle of impregnated fibers into preset lengths in order to obtain semi-finished products having a controlled length of impregnated fibers, said semi-finished products being subsequently subjected to moulding or to thermoforming or to another kind of processing in order to obtain finished manufactured products.

26. An apparatus according to any of the claims 17 to 24, further comprising, downstream said second means (3), a system consisting of at least a cooling equipment (5) and a winding machine when manufacturing continuous products.

27. A plant comprising at least two apparatuses according to any of the claims 17 to 26, fitted to manufacture semi-finished products, such as pipes, plates, open or closed section bars, comprising said bundles of impregnated parallel fibers.
